# EUROPEAN PATENT APPLICATION

(11) **EP 1 284 465 A2**
(43) Date of publication of application: **19.02.2003**
(21) Application number: 02015952.1
(22) Date of filing: 17.07.2002
(51) Int. Cl.: G06F 17/60

(54) **Action management support system**

(30) Priority: 19.07.2001 JP 2001219533
(71) Applicant: Toyota Caelum Incorporated, Nagoya-shi, Aichi-ken, 460-0008 (JP)
(72) Inventor: Kawai, Motomasa, Nagoya-shi, Aichi-ken, 460-0008 (JP); Rimoldi, Attilio, San Jose, California 95119 (US); Bassi, Gian Paolo, San Jose, California 95119 (US)
(74) Representative: Winter, Brandl, Fürniss, Hübner, Röss, Kaiser, Polte Partnerschaft

(57) **Abstract**

An action management support system that manages and supports through computers actions taken by persons in charge of various duties accompanied by production. The system uses a process information (11) that defines a flow of a plurality tasks in a duty executed by the at least one person, and a product information (12) that includes contents of a product manufactured at each of the plurality of tasks. The system also includes a relating means (10) that controls the system to relate the each of the plurality of tasks with the product information immediately before each task, the relationship involving an input and output information of each task, and a product manufactured at each task. Furthermore, the system includes a related information-retaining means (10) that stores and retains the each of the plurality of tasks and the product information that are related to each other so that the relationship of the each of the plurality of tasks and the product information can be used as a reference.

## Description

### BACKGROUND OF THE INVENTION

### 1. Field of Invention

The present invention relates to an action management support system which manages and supports necessary actions taken by each person in various duties during production.

### 2. Description of Related Art

As for related systems, various systems have been used conventionally. In the design and manufacturing industries, a work flow system which manages design, manufacturing and processing duties, all of which are time-series and carried out by plural persons, is discussed as an example. The work flow system assigns each person working in the product design and manufacturing processes to each task and also manages progress during the processes. The system is usually established as a computer network system which each person can access. A person can access information through accessing the system such as when an assigned task should be finished. The person who finishes the assigned task then inputs information to the system that the task have been finished. Therefore, the person can objectively manage the entire progress during production.

On the other hand, regarding managing products manufactured in the design and manufacturing processes, a Product Data Management (PDM) is discussed as an example. The PDM system is a computer system which manages by a tree the information about components of a product. Management data of the system includes a serial number and specifications of each component which makes up each node of the tree, and Computer Aided Design (CAD) data regarding each component. The tree defines relations among the components and the product, and information about each product manufactured in the design and manufacturing processes is managed uniformly.

However, in actual product design and manufacturing processes, both the number of processes and products manufactured through the processes are enormous. Therefore, the following problems occur when a person executes an assigned task with the aid of the conventional work flow system or the PDM system.
(A) It takes a while to obtain pieces of information about a product necessary for the task from information about products previously manufactured.
(B) When the assigned task is executed based on completion of plural tasks which are executed in parallel, it is difficult to track progress of these plural tasks.
(C) When a product needs to be altered, it is difficult to completely identify another product which also needs to be altered due to the original alternation.

Because of problems such as the above-mentioned ones, action management can be extremely complicated.

Furthermore, the above-mentioned problems are also common to industries other than the above-mentioned design and manufacturing industries, for example, industries with a large number of processes and products manufactured though the processes, both of which need to be managed. Therefore, action management is also extremely complicated in these industries.

### SUMMARY OF THE INVENTION

It is an object of the present invention to provide an action management support system that permits an easy and smooth management of actions taken by each person in charge of various duties accompanied by production, the system taking into consideration of the above-mentioned problems.

According to the present invention, actions taken by each person in charge of various duties accompanied by production are managed and supported through computers in the above-mentioned action management support system according to the following pieces of information: a process information that defines a flow of plural tasks in a duty executed by at least one person; and a product information which includes contents of a product manufactured at the each of the plurality of tasks. The action management system further includes a relating means for controlling the system to relate, immediately before each task, each task with the product information, the relationship involving an input and output information of each task, and the product manufactured at the each task and a related information-retaining means for storing and retaining the each task of the plurality of tasks and the product information that are related to each other so that the relationship of the each of plurality of the tasks and the product information can be used as a reference.

According to the above structure, immediately before the each task, because each task is related to each product information about a product manufactured and a product manufactured at each task, and each task and each product information can be used as references. Therefore, designers, engineers, and persons in a related department can promptly check their assigned tasks and refer to necessary information to execute their tasks.

According to a further aspect of the invention, it is also preferable that the each product information includes information that shows a relation between the product information and every product manufactured through the each of the plurality of tasks

According to the above-described structure, a relation between each product information becomes clear. Therefore, managing actions can be carried out more appropriately.

According to a further aspect of the invention, it is also preferable that the related information-retaining means identifies only a first related product information before each corresponding task as an input information of the each corresponding task, and identifies and alters a second related product information after the each corresponding task as an output information of the each corresponding task.

According to the above-described structure, an input information can only be indicated. Therefore, responsibility and authority to the product information about a product which is related to the input information are given to a person in charge of a task where the product is manufactured.

According to a further aspect of the invention, the related information-retaining means the related information-retaining means includes an access attribute management means which manages an access attribute of the product information related to the each of the plurality of tasks and alternating product informations related to the each of the plurality of tasks including the first product information is permitted as for a product information that is given an attribute to permit altering the first related product information through the access attribute management means.

As for a product information which is given an attribute to permit altering the product information through the access attribute management means, alternating product informations related to any tasks is permitted. Therefore, an action management with more flexibility is possible.

According to a further aspect of the invention, it is preferable that the related information-retaining means includes an alternation-accepting means which accepts a direction to alter a specific product and an alternation notification means that sends a notification of the direction to a person in charge of a task where the specific product is manufactured.

According to the above-described structure, a direction to alter a specific product is accepted and a person in charge of a task where the specific product is manufactured is automatically searched according to a relation between the task and the product information. Then the direction is automatically notified to the person in charge of the task. Therefore, an alternation notification can promptly and securely be carried out.

According to a further aspect of the invention, it is preferable that the related information-retaining means includes a progress inquiry means that accepts an inquiry from outside about progress of either an execution of a specific task or manufacturing a specific product and an answer-requesting means that requests a person in charge of a task that corresponds to the inquiry to answer the inquiry.

According to the above-described structure, an inquiry about progress of either executing a specific task or manufacturing a specific product is accepted from outside. For example, when an inquiry about progress of manufacturing the specific product is made, a person in charge of a task to manufacture the product is searched according to a relation between the task and the product information. On the other hand, when an inquiry about progress of executing the specific task is made, a person in charge of the task is searched according to information about the task (a process information). Furthermore, an inquiry about progress can be made promptly by requesting a person in charge of a task corresponding to the inquiry to answer the inquiry.

The outline of the process information is that the process information includes detailed information about the each of the plurality of tasks with multiple steps of works. The outline of the related information-retaining means is that the related information-retaining means includes a means to request each person in charge of the each task to report progress of the each of the plurality of tasks to report progress of the production.

According to the above-described structure, obtaining details of progress of executing the each task is possible by requesting each person in charge of the each task to report progress of the production.

According to a further aspect of the invention, it is preferable that the related information-retaining means further includes a progress notification means that automatically sends to a specific part notification of reported progress of a specific work among the multiple steps of work.

According to the above-described structure, the reported progress of a specific step among multiple steps of works is automatically notified to a specific part. Therefore, promptly obtaining the progress of the specific step of work at the specific part is possible. The specific part may be such a person or means as to a manager with a requisite for obtaining information about progress of a task including the specific step of work or a specific access means which is expected to be accessed by the person mentioned above.

According to a further aspect of the invention, it is preferable that the related information-retaining means further includes a notification setting means that permits appropriately setting an automatic notification level of the portion that automatically sends the notification of reported progress of the specific work.

According to the above-described structure, a specific work automatically notified can appropriately be set at each task. Therefore, progress notification at each of the plurality of tasks can be carried out more appropriately.

According to a further aspect of the invention, it is preferable that the process information includes information about requisite work items which are set at each of the plurality of tasks and the related information-retaining means further includes an input-requesting means that requests inputting whether the requisite work items have been executed.

According to the above-described structure, quality of each task can be improved by requesting inputting whether the requisite work items have been executed.

According to a further aspect of the invention, it is preferable that the related information-retaining means further includes an automatic notification means that automatically notifies to a specific part whether the requisite work items have been executed.

According to the above-described structure, whether the requisite work items have been executed is automatically notified to a specific part. Therefore, accurately obtaining execution of the requisite work items is possible. The specific part may be such a specific person as to a manager of the each task or a person in charge of the each task with a requisite for obtaining information about execution of the each task. The specific part also may be a specific access means that is expected to be accessed by the specific persons mentioned above.

According to a further aspect of the invention, it is preferable that the related information-retaining means further includes an alternation inquiry means which automatically inquires whether an application is approved when a person who is not in charge of a task applies for an alternation of a product manufactured at the task.

According to the above-described structure, whether the application is approved or not is automatically inquired when a person who is not in charge of the each task applies for an alternation of a product manufactured at the task. Therefore, action management with more flexibility is possible.

### BRIEF DESCRIPTION OF THE DRAWINGS

The above-mentioned and other objects, features, advantages, technical and industrial significance of the present invention will be better understood by reading the following detailed description of preferred embodiments of the invention when considered in connection with the accompanying drawings, in which:
Fig. 1 is a block diagram which shows an exemplary action management support system according to a first embodiment of the invention;
Fig. 2 is a block diagram which shows exemplary Product Data Management (PDM) data;
Fig. 3 is a block diagram which shows exemplary relations between a process information and a product information according to the first embodiment of the invention;
Figs. 4a-b are diagrams which show exemplary screen displays that are observed when a person accesses the action management support system according to the first embodiment of the invention;
Figs. 5a-c are diagrams which show exemplary screen displays that are observed when a person accesses the action management support system according to the first embodiment of the invention;
Fig. 6 is a flow chart which shows an exemplary process order that is used when a person accesses the action management support system according to the first embodiment of the invention;
Fig. 7 is a diagram which shows an exemplary notification setting status of progress regarding executing each task according to the first embodiment of the invention;
Figs. 8a-b are diagrams which show an exemplary notice setting status of progress regarding executing each task according to the first embodiment of the invention;
Fig. 9 is a flow chart which shows an exemplary process order that is used when progress is inquired according to the first embodiment of the invention;
Fig. 10 is a flow chart which shows an exemplary process order when an alteration of a product is requested according to the first preferred embodiment;
Fig. 11 is a flow chart which shows an exemplary notification status of product alternation according to the first embodiment of the invention;
Fig. 12 is a block diagram which shows an exemplary screen display of an action management support system according to a second embodiment of the invention;
Fig. 13 is a flow chart which shows an exemplary process order regarding requisite task items management according to the second embodiment of the invention;
Fig. 14 is a flow chart which shows an exemplary process order in an action management support system when product information alternation is applied according to a third embodiment of the invention.

### DETAILED DESCRIPTION OF THE EXEMPLARY EMBODIMENTS

In the following description and the accompanying drawings, the present invention will be described in more detail with reference to exemplary, preferred embodiment.

The following describes the first preferred embodiment applying the action management support system to a system to manage a series of actions in car manufacturing.

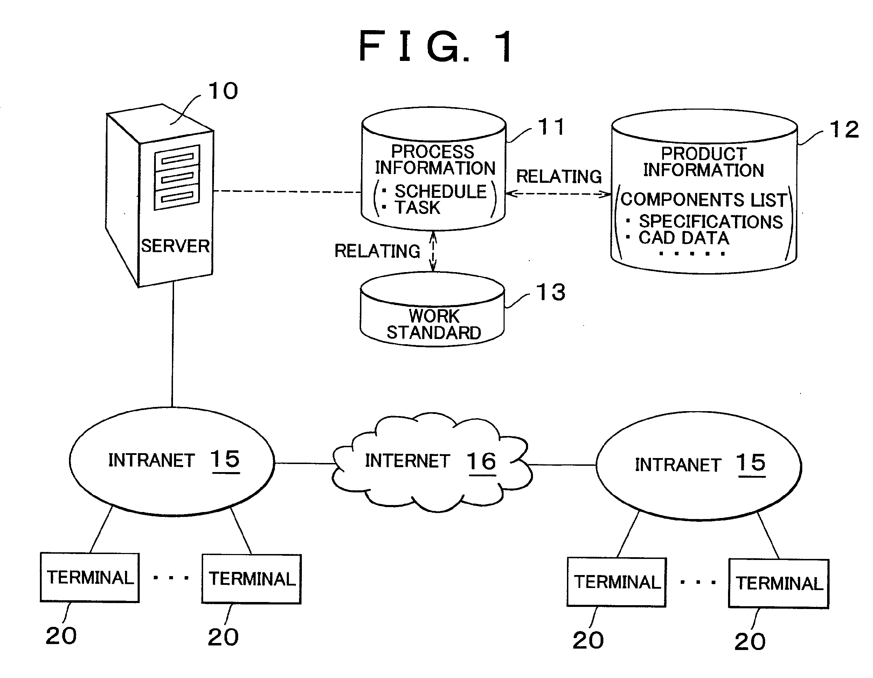

Fig. 1 is the block diagram which shows the entire organization of the action management support system according to the present preferred embodiment. As shown in Fig. 1, the action management support system includes a server 10, an intranet 15, an intranet 16 and plural terminals 20 which are accessible by the server 10 through the intranet 15 and 16.

The server 10 includes a process information 11 with definitions about plural tasks and their flow in car manufacturing, a product information 12 which includes information about intermediates manufactured at each task and end product (car), and a work standard 13. Furthermore, the server 10 relates itself to the process information 11, the product information 12, and the work standard 13 and has related information-retaining function by which the server 10 can display the related information for reference through the terminals 20.

The process information 11 includes information about schedule and contents of each task in the series of processes. And each task is related to each other task in the series of processes. The work standard 13 is a manual which is used at each task.

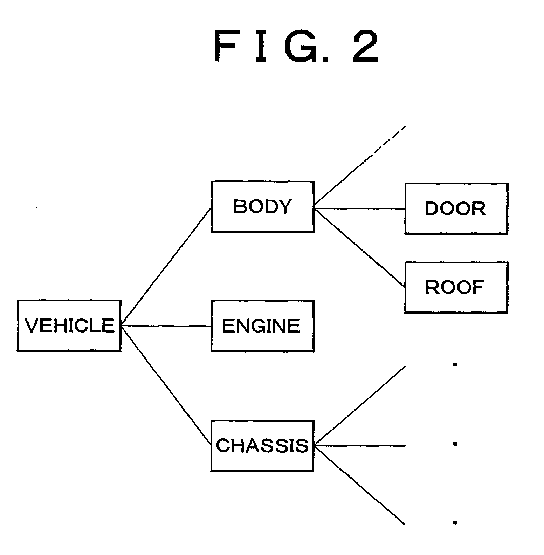

On the other hand, the product information 12 includes a components list as PDM (Product Data Management) type data. As shown in Fig. 2, the components list is a defined hierarchy of the components with the end product (car) at the top. By the hierarchy, relations among all the intermediates and the end product at each task can be defined. And information about the specifications of the components and intermediates, information about the contents of the intermediates, and so on, are allocated to each node of a tree. In other words, data such as three-dimensional CAD (Computer Aided Design) data, which is a product manufactured at a task and can be allocated to a node of the tree, are allocated to the tree. And data such as an actual mold cannot be allocated to a node of the tree so that information about a product is allocated. For example, in the case where data such as an actual mold cannot be allocated to a node of the tree, information about a product is allocated to the node of the tree.

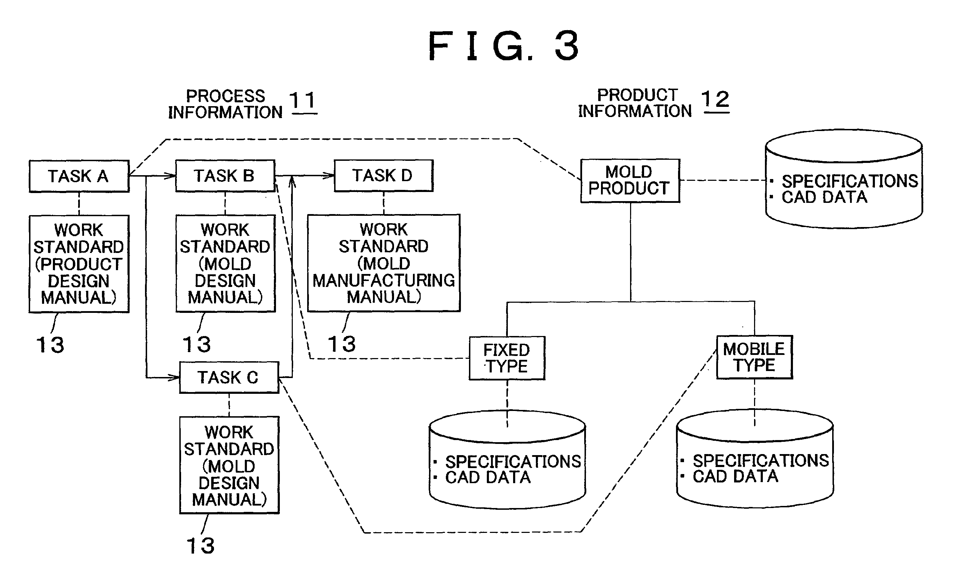

The process information 11, the product information 12, and the work standard 13 are related each other by the related information-retaining function as shown in Fig. 3. The following explains the related information-retaining function.

Fig. 3 shows processes of mold product design (product design), mold design, and mold manufacturing of a specific component in the car manufacturing. In this case, the process information 11 includes a part regarding a task A for product design, a task B and a task C for mold design, and a task D for mold manufacturing all of which are shown in Fig. 3. On the other hand, the product Information 12 includes information regarding the product itself, fixed and mobile information about components list, and specifications and CAD data both of which are linked to each component of the components list. Furthermore, the work standard 13 includes a product design manual, a mold design manual and mold manufacturing manual.

Each task (A, B, and C) is related to input information which includes information about a product manufactured at a task right before each task and a work standard at the task. Each task is also related to output information which includes information about the product at the task. For example, product information about a mold product and a mold design manual are related to the task B as input information. Fixed CAD data formed at the task B as a product and a product information such as specifications related to the CAD data are related to the task B.

In other words, each task (information about schedule and tank contents) is linked to corresponding work standard, that is, the task A is linked to the product design manual, the task B and C are linked to the mold design manual, and the task D is linked to a mold manufacturing manual. And each work standard is related to each task as input information. On the other hand, for example, product information about a mold product is related to the task A as output information and to the task B as input information.

As described above, information needed to execute a task can be obtained promptly since the process information 11 and the product information 12 are related to each other, in other words, input and output information are related to each task.

The following explains operations to obtain necessary information to execute the same task as an assigned task when a person accesses the above-described action management support system.

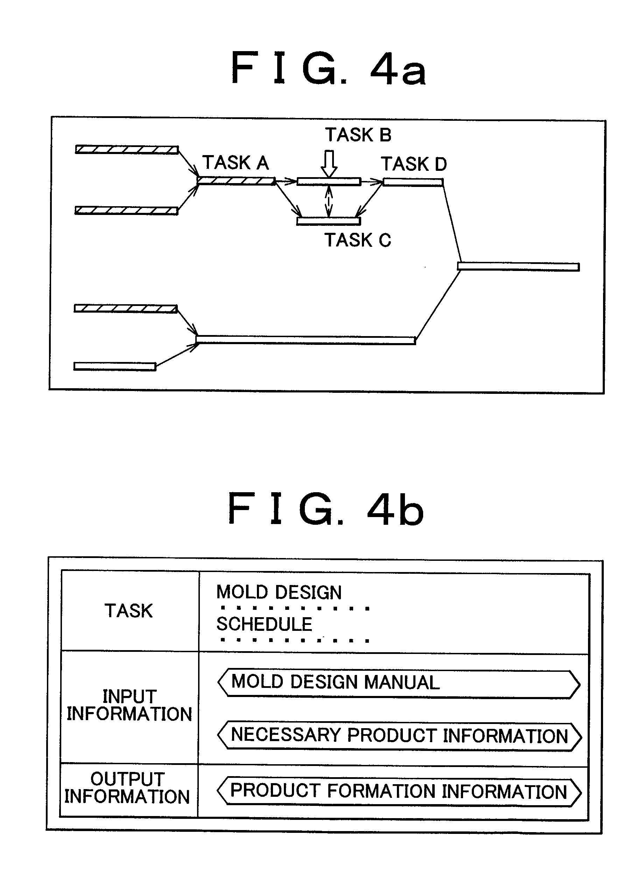

Fig. 4a and 4b show display examples of the terminal 20 when a person accesses the action management support system through the terminal 20 shown in Fig. 1. Fig. 4a is a Gantt chart for managing schedule at series of processes and a display example of a part of the process information 11. In the Gantt chart, a part corresponding to an assigned task is marked when a person in charge accesses the action management support system (As an example, the white arrow is shown in Fig. 4a). Therefore, a person can obtain the assigned task. This case assumes that the task B in Fig.3 is assigned.

Furthermore, Fig. 4b is a display example of information about the task B and input and output information related to the task B. For example, the display shown in Fig. 4b can be made accessible by clicking the part pointed by the arrow in Fig. 4a.

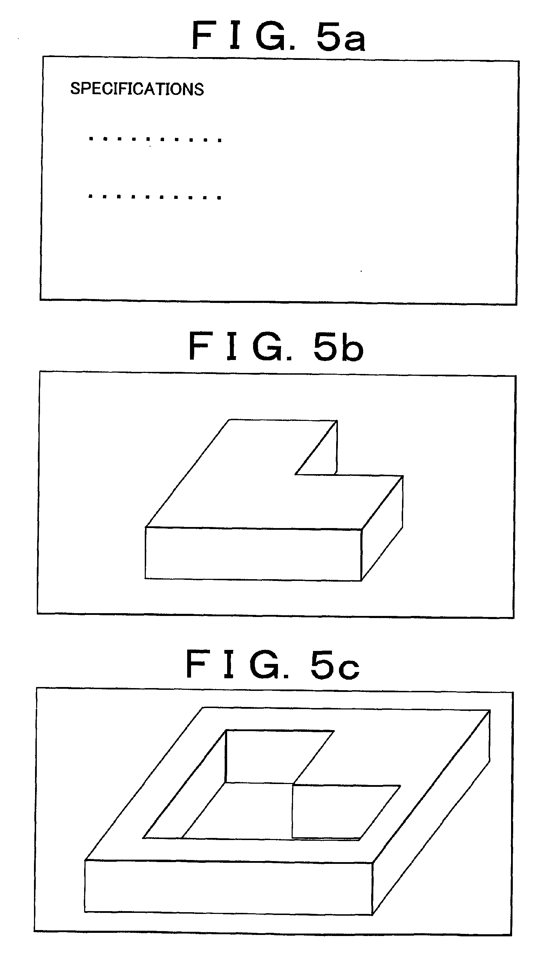

As shown in Fig. 4b, a person can not only understand a task or schedule assigned but also obtain necessary input information to execute the task. In other words, for example, a person can see a mold design manual by clicking "mole design manual" in the input information and the displays shown in Fig. 5a and 5b by clicking "necessary product information" in the input information. Fig. 5a is a display example of specifications of a mold product which is a necessary product to execute the task B (mold design). On the other hand, Fig. 5b is a display example of three-dimensional CAD data of the mold product (product at the tack A) which is a necessary product to execute the task B (mold design).

The person in charge of executing the assigned task B can carry out the mold design (task B) according to these input informations and the information about the task. The mold design is carried out on a display shifted from the display shown in Fig. 4b. The person in charge can see the display shifted from the display in Fig. 4b by clicking "product manufacturing information" which is an output information in Fig. 4b. Fig. 5c is a display example of an output information when the task B is completed. In this case, three-dimensional CAD data of manufactured product is output information. Then data made at the task B becomes input information of the task D as shown in Fig. 3.

The related information-retaining function possessed by the server 10 also works as an access attribute management function to manage access attributes of the product information 12 related to each task described above. Attributes to prohibit alternation or erasure of information are given to input information by the access attribute management function. On the other hand, attributes to permit production or alternation of information are given to output information by this function. Therefore, the each person with each task is given responsibility and authority to product information made at each task.

Specifically, according to the present embodiment, a person who accesses the system through the terminal 20 is identified by the system. Then, regarding information about product manufactured at each task assigned to each person, any person other than each person to whom each tack assigned is prohibited from easily alternating or erasing information by the access attribute management function. Then each person with each task is given responsibility and authority.

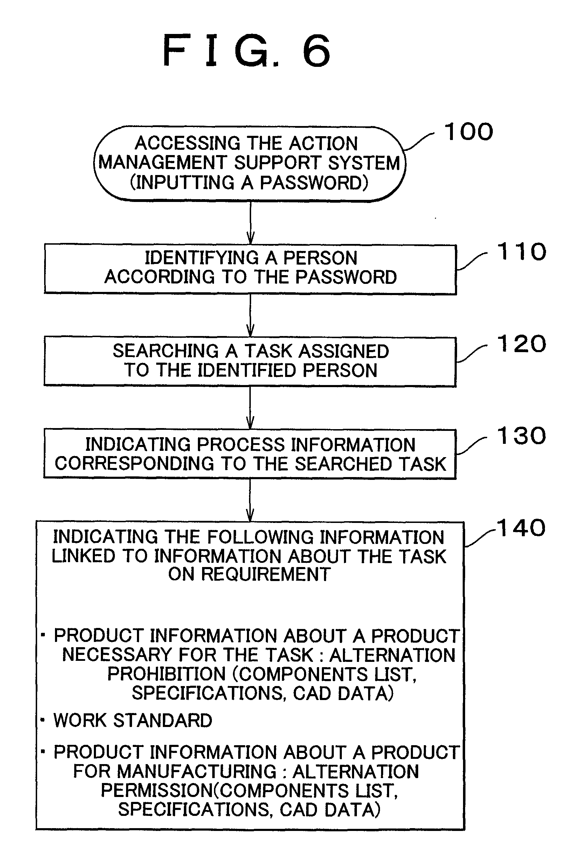

The following specifically explains processes carried out by the related information-retaining function when a person accesses the action management support system by referring to Fig. 6 which is a flow chart showing the process order.

First, when a person accesses the system by inputting a password in the system (step 100), the person is identified by the system (step 110). In other words, it is essential to input a password when a person accesses the action management support system through the terminal 20. Then the person is identified according to the inputted password. A task assigned to the person is subsequently searched (step 120) and information about the searched task is displayed (step 130). In this case, the screen shown in Fig. 4 is displayed.

Finally, the work standard 13 and the product information 12 are displayed by clicking a designated part of the screen shown in Fig. 4b so that the work standard 13 and the product information 12 are displayed, for example, in such a way shown in Fig. 5 (step 140).

As described above, information about a task assigned to a person and information needed to execute the task can be obtained promptly when the person accesses the system according to this embodiment.

In this connection, a person with an assigned task may wish to obtain information other than an input and output information of the task. For example, the person with the task B shown in Fig. 4 may wish to access a product information about a product manufactured at the task C which is executed alongside the task B. In this case, the person can input a command to relate the assigned task to the product information which the person wishes to access in the related information-retaining function through the terminal 20. For example, a command to relate the task B and the task C (indicated with the single-dash chain line in Fig. 4a) can be inputted. On the other hand, the related information-retaining function permits the person with the task B to access an output information of the task C by the access attribute management function under certain conditions.

Furthermore, the following settings have been done to enable a person to track progress of execution about any task. In other words, it is assumed that each process information includes detailed information about each task with multiple steps of works. Then the related information-retaining function reports progress of work at each step to each person with each task through the terminal 20. Therefore, progress of executing each can be managed by the related information-retaining function.

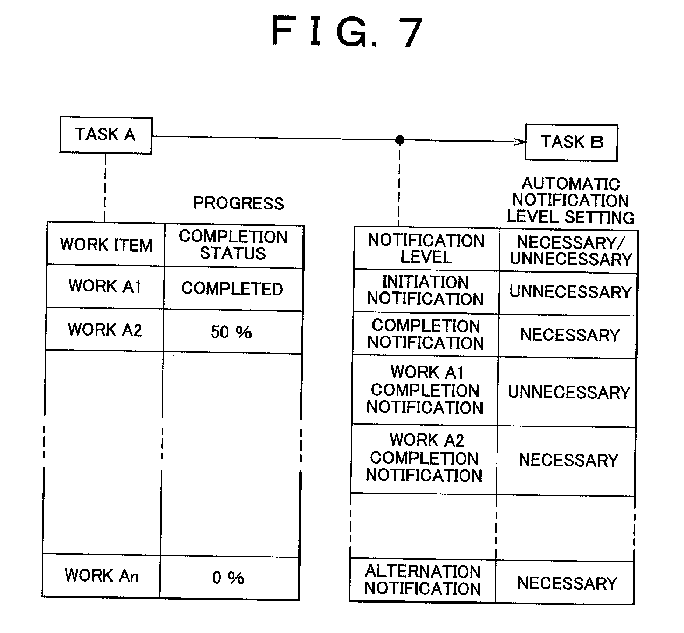

The related information-retaining function reports information about progress of a specific work among progress of multiple steps of works to a specific part. According to this embodiment, the specific part is one of the terminals 20 in the system. Furthermore, the related information-retaining function has an automatic notification level-setting function which permits the specific work for notification to be set at each task. Therefore, a work for notification can be set at each task appropriately. The automatic notification level-setting function is explained by referring to Fig.7 hereafter.

Fig. 7 shows an example of the task A including "n" steps of works. Whether automatic notification of progress at each work is carried out (or not carried out) is designated by setting an automatic notification level appropriately when the process information 11 is formed, for example. In Fig. 7, settings are done in such a way that it is not necessary to automatically notify initiations of a series of works related to the task A and completion of a work A1. Alternation notification, which is set whether it is necessary to notify alternation of automatic notification level settings when the alternation is carried out after the termination of the task A, is described later.

The related information-retaining function has the function of requesting a person with the assigned task A including "n" steps of works to report progress of each work through the terminal 20. Therefore, the person inputs the progress of each work through the terminal 20. In Fig. 7, the input is done in such a way that the work A1 is completed and 50% of a work A2 is finished.

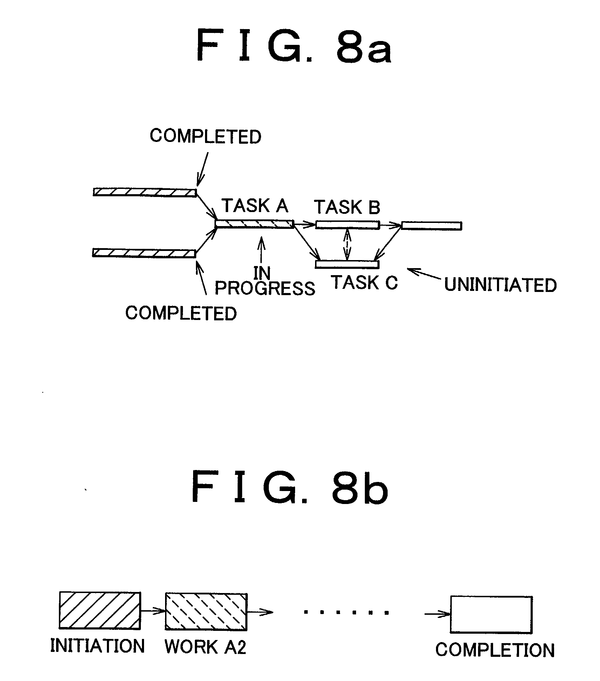

Notification of progress, as described above, is carried out through the Gantt chart shown in Fig. 4. In other words, completed tasks, tasks in progress, and uninitiated tasks are indicated with different marks to distinguish them as shown in Fig. 8a. Furthermore, the screen shown in Fig. 8a can display in details. In this case, progress of work at each step according to setting of automatic notification level is displayed as shown in Fig. 8b.

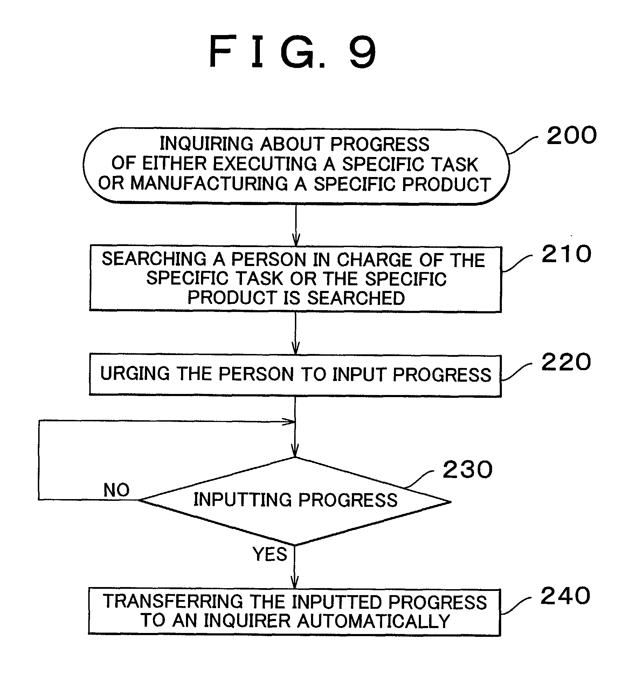

Because of this structure described above, progress of executing each task becomes clear. Checking like "Will each task be finished to make the date of delivery of a final product?" can be made accurately. Furthermore, the system can correspond to an inquiry about progress of either executing a specific task or manufacturing a specific product no matter whether the automatic notification settings are done to the specific task or the specific product. The following discussion explains the inquiry according to Fig. 9.

Fig. 9 shows process order executed by the related information-retaining function when the inquiry is made. When the inquiry about progress of either executing a specific task or manufacturing a specific product is made (step 200), a person in charge of the specific task or the specific product is searched (step 210) according to the series of processes. The inquiry about progress of either executing a specific task or manufacturing a specific product is accepted by the related information-retaining function through the terminal 20. The inquiry about progress of executing the specific task is not limited to the steps of works described above. In this case, free-style questions can be asked by a person who makes the inquiry. On the other hand, when the inquiry about progress of manufacturing the specific product is made, a person in charge of a task to manufacture the product is searched according to a relation between the task and the product information. When the inquiry about progress of executing the specific task is made, a person in charge of the task is searched according to the process information.

When information about the person in charge of the specific task is sought (step 210), the system requests the person to input progress of executing the task (step 220). At the step 220, the system requests the person, for example, by displaying that the inquiry has been made through the terminal 20 which the person uses.

When the person in charge of the task answers the inquiry about progress of executing the task (step 230), the answer is transferred to an inquirer automatically (step 240). By the automatic transfer of the answer as described above, time to make an inquiry about progress of a task can be shortened and prompt answering is possible.

When altering a specific product is requested, a task to manufacture the product is searched and the request is automatically notified to the person in charge of the task.

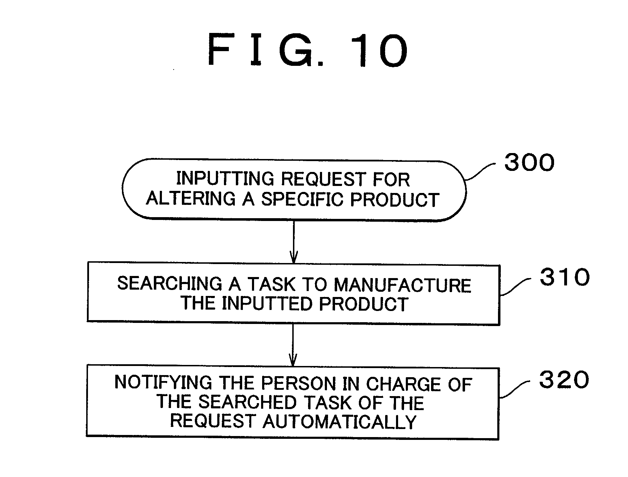

The following discussion explains process order executed by the related information-retaining function when an alternation is requested by referring to Fig. 10. When altering a specific product is requested (step 300), a task to manufacture the product is searched (step 310) according to the series of processes. The request is accepted through the terminal 20. Then the task to manufacture the product is searched by utilizing relations among the task and its input and output information. When the task to manufacture the product is searched, the request is automatically notified to the person in charge of the task (step 320). In this case, the request for altering the product may be notified through the terminal 20.

According to the above-described processes, when a specific product needs to be altered, a request for altering the product can be notified promptly. Furthermore, the request can securely be notified to a person in charge of a task to manufacture a product which needs to be altered due to the alternation according to the above-described structure.

In other words, each person in charge of each product who is notified of the request can easily understand a product which needs to be altered due to the alternation in each product. For example, when an alternation in the task D (mold manufacturing) needs to be requested, a person in charge of the task D can understand that products (fixed and mobile information), which is input information of the task D, need to be altered. So that the person can make a request for altering the products. Therefore, persons in charge of the task B and the task C is identified by the related information-retaining function and the request is notified to these persons. Then the persons can understand that a product (mold product), which is input information of the task B and the task C, needs to be altered.

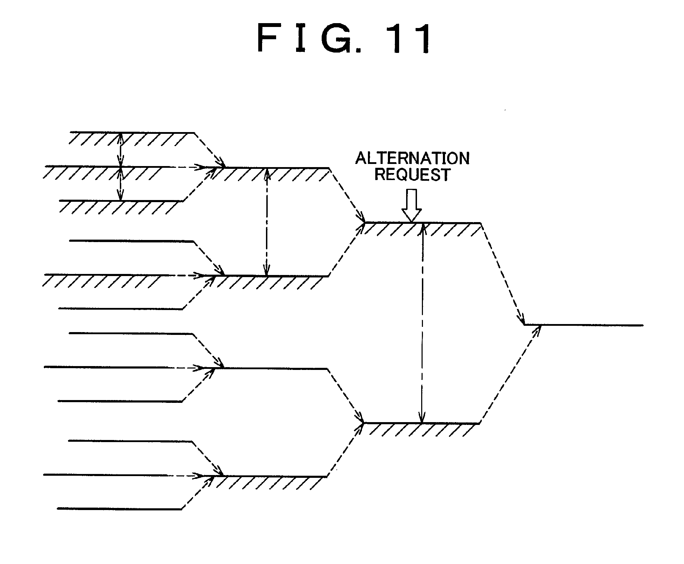

As described above, a notification that a request for altering a specific product can be sent to every single person in charge of a product which needs to be altered due to the request by relating the tasks to input and output informations. In fact, when a product has numerous manufacturing processes, it is difficult to understand every single task which needs to be altered. Thus understanding these tasks is made possible by retracing tasks and products related each other according to the present embodiment. Fig. 11 is a Gantt chart showing an example of a result of retracing tasks which need to be altered due to a request for altering a product. In Fig. 11, the solid lines indicate each task in manufacturing processes, the solid lines with slant lines underneath indicate tasks which need to be altered, and the single-dash chain lines indicate tasks which need to be executed in parallel with each other.

According to the present embodiment explained above, the following effects can be obtained.
(1) Each task is related to input information including product information about a product manufactured at a task immediately before each task and each work standard. Therefore, designers, engineers, and persons in a related department can promptly check their assigned tasks and refer to necessary information to execute their tasks.
(2) Each task is related to output information including product information about a product manufactured at each task. Therefore, each person in charge can easily access a product in the process of being manufactured.
(3) Each task is divided into multiple steps of works and each person in charge of each task reports progress at each step of work. Therefore, information about progress of each task can be managed appropriately in the system.
(4) Progress of a specific work among multiple steps of works at a task is automatically notified. Therefore, promptly grasping progress of each task is made possible.
(5) A specific work whose progress is automatically notified can be set at each task. Therefore, progress of executing each task can be notified more appropriately.
(6) The system has the structure with which the system can accept an inquiry about progress of either executing a specific task or manufacturing a specific product, transfer the inquiry to a person in charge of either the task or a task to manufacture the product, and request the person to answer the inquiry. Therefore, processes to make an inquiry can be made easy.
(7) An answer to an inquiry is automatically transferred to an inquirer. Therefore, promptly answering to an inquiry is made possible.
(8) When a specific product needs to be altered, the alternation notification is automatically sent to a person in charge of a task to manufacture the product. Therefore, a notification of the alternation can securely and promptly be sent to every single person in charge of a task to manufacture a product which needs to be altered due to the alternation.
(9) Accessing the server 10 in the above-described system can be done not only through the intranet 15 but also the internet 16. Therefore, the process information 11 and the product information 12 can be supplied to footholds such as foothold overseas and cooperative makers in long distances.

### SECOND EMBODIMENT

The following mainly describes differences between the first embodiment and the second embodiment both of which apply the action management support system according to the present invention to a system to manage series of actions in car manufacturing as referring to the drawings.

According to the present embodiment, the process information 11 includes information about requisite work items at each task. The related information-retaining function requests each person in charge of each task to input whether these requisite work items have been executed or not. Then the related information-retaining function notify whether these requisite work items have been executed or not to a specific part according to the input.

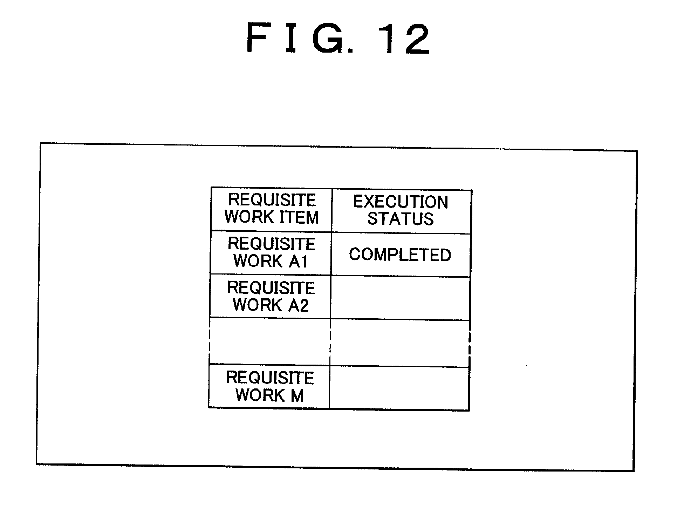

Specifically, when each requisite work item is executed, the execution is inputted in the related information-retaining function through the terminal 20 according to the present preferred embodiment. For example, the terminal 20 may display a screen to request input through the terminal 20. Then the related information-retaining function displays a result of the input, for example, as a relation between a requisite work and an item-completion status as shown in the aspect of Fig. 12. In this case, it is assumed that the specific part is a terminal with which a person in charge of the task and his or her manager with a requisite for obtaining information about whether the task has been executed can access. Therefore, the system can make these persons grasp completion status of each requisite work item.

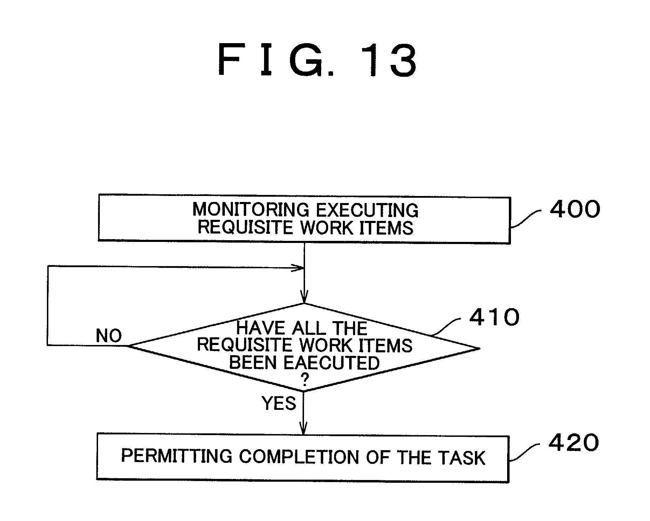

Furthermore, the information-retaining function according to the present embodiment does not permit completion of a task until all requisite work items have been executed as the processes shown in Fig. 13. In other words, the system monitors executing requisite work items (step 400) according to input about whether each requisite work item is executed or not done by a person in charge of the task. When all the requisite work items are executed (step 410), the system permits completion of the task (step 420). Therefore, completion of each task can be managed more accurately.

According to the present embodiment explained above, the following effects can be obtained.
(10) Executing each requisite work item is displayed according to input of the execution. Therefore, the system can make each person in charge of each task understanding completion status of each requisite work item. Furthermore, quality of each task can be improved.
(11) The system does not permit completion of a task until all requisite work items have been executed. Therefore, completion of each task can be managed more accurately.

### THE THIRD EMBODIMENT

The following mainly describes differences between the first embodiment and the third embodiment both of which apply the action management support system according to the present invention to a system to manage series of actions in car manufacturing as referring to the drawings.

According to the above-described first embodiment, access attributes of product information related to each task is managed by the above-described access attribute management function. Especially, alternation or erasure of input information of each task is prohibited. In other words, only each person in charge of each task is permitted to alter or erase product information about each product manufactured at each task. On the other hand, when a person who is not in charge of a task applies for an alternation of product information about a product manufactured at the task, the related information-retaining function is given the function of automatically inquiring whether an application is approved or not according to the present embodiment.

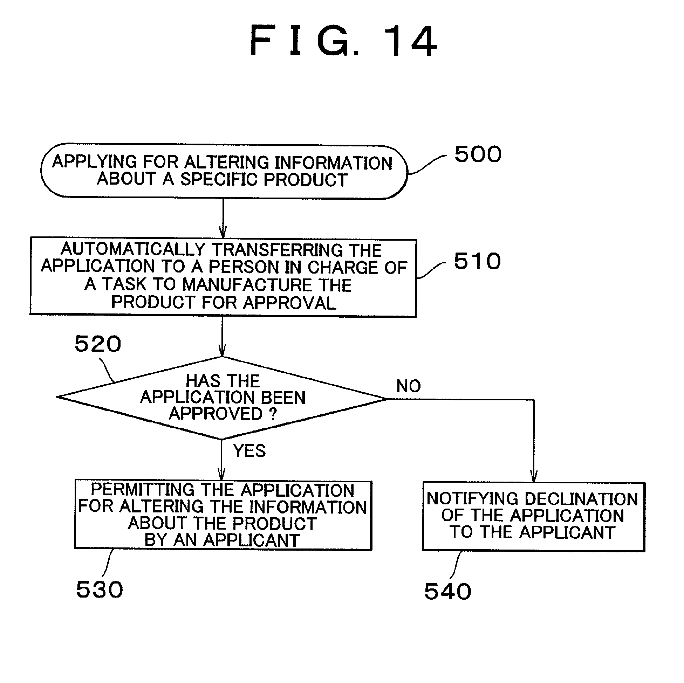

Specifically, when an alternation is requested, the related information-retaining function carries out the processes shown in Fig. 14. In this case, when an application for altering information about a specific product is inputted through the terminal 20 (step 500), a notification of the application is sent to a person in charge of a task to manufacture the product (step 510). By identifying the specific product, the task to manufacture the product is searched according to its relation to the process information 11 and the product information 12. Then a notification of the alternation application of the searched product is sent to a person in charge of the searched product.

The person decides on whether to approve the application or not and, for example, the decision is inputted in the related information-retaining function through the terminal 20. On the other hand, the related information-retaining function determines whether the application has been approved or not by the person. When the application is approved (step 520), the access attribute management function permits the alternation application of the product information by an applicant (step 530). When the application is not approved (step 520), the declination of the application is automatically notified to the applicant (step 540).

According to the present embodiment explained above, the following effects can be obtained.
(12) When a person who is not in charge of a task applies for an alternation of product information about a product manufactured at the task, the system automatically inquires information about a person in charge of the task regarding whether to approve the application or not. If the application is approved, the alternation of the applicant is permitted. Therefore, action management with more flexibility is possible.

Each embodiment described above may be altered as follows.
- Identifying each person in charge of each task is not limited to inputting a password like each embodiment. For example, a structure may be formed in such a way that a name of each person in charge of each task is indicated so that a person can select his or her name. As another example, a structure may be formed in such a way that a different task is assigned to a different terminal. In this case, too, an access attribute to prohibit alternation of input information of a task may be given to the input information and an access attribute to permit alternation of output information of a task may be given to the output information.
- Instead of providing the automatic notification level setting function, settings may be done in such a way that automatic notification is carried out at each work of multiple steps of works in a task.
- Instead of reporting percentage of progress in each work of multiple steps of works as shown in Fig. 7, only whether each work has been completed or not may be reported.
- The Gantt chart is not the only means to carry out automatic notification of progress. Instead of notifying progress to every person in charge of a task who accesses the system, progress may be notified only to such a person as to a manager with a requisite for obtaining information about progress of a task.
- Notification of progress may be done as follows instead of being done by each person in charge of each task. Progress may be detected automatically. For example, when output information is accessed for the first time or when writing is carried out in output information for the first time may be determined as initiation of executing a task.
- As for managing an access attribute of each product information, it is not limited to the means described in each embodiment. Especially, it is preferable that alternation of any product information is approved when it comes to a manager's access. Accessing product information about a product manufactured at a task executed in parallel with another task may be permitted in advance. Furthermore, accessing every product information may be approved in each embodiment.
- Though a network system including one of the servers 10 and the multiple terminal 20 which access the server 10 is assumed according to each embodiment, a dispersed system which manages information by plural computers may be formed.
- Though PDM type information which defines relations among each product and every product manufactured through each task as product information is adopted, other types of information may be adopted. In the other case, effects equivalent to the effects in each embodiment can be obtained by relating each task to input and output information.
- Applying the present invention is not limited to action management in car manufacturing. It is also effective with various office duties.

Finally, the following can be grasped from each embodiment and its altered examples as technical thoughts. In other words, the related information-retaining function may further include a means not to permit completion of each task until every requisite work item is executed in the action management support system. Furthermore, input information of each task may further include work manual.

In the illustrated embodiments, a controller is implemented with a general purpose processor in the server. It will be appreciated by those skilled in the art that the controller can be implemented using a single special purpose integrated circuit (e.g., ASIC) having a main or central processor section for overall, system-level control, and separate sections dedicated to performing various different specific computations, functions and other processes under control of the central processor section. The controller can be a plurality of separate dedicated or programmable integrated or other electronic circuits or devices (e.g., hardwired electronic or logic circuits such as discrete element circuits, or programmable logic devices such as PLDs, PLAs, PALs or the like). The controller can be suitably programmed for use with a general purpose computer, e.g., a microprocessor, microcontroller or other processor device (CPU or MPU), either alone or in conjunction with one or more peripheral (e.g., integrated circuit) data and signal processing devices. In general, any device or assembly of devices on which a finite state machine capable of implementing the procedures described herein can be used as the controller. A distributed processing architecture can be used for maximum data/signal processing capability and speed.

While the invention has been described with reference to embodiments thereof, it is to be understood that the invention is not limited to the discussed embodiments or constructions. To the contrary, the invention is intended to cover various modifications and equivalent arrangements. In addition, while the various elements of the preferred embodiments are shown in various combinations and configurations, which are exemplary, other combinations and configurations, including more, less or only a single element, are also within the spirit and scope of the invention.

## Claims

1. An action management support system for managing and supporting through computers actions taken by at least one person in charge of at least one duty accompanied by production, the system using a process information (11) that defines a flow of a plurality of tasks in a duty executed by the at least one person, and a product information (12) that includes contents of a product manufactured at each of the plurality of tasks, **characterized in that** the action management support system includes a relating means (10) for controlling the system to relate, immediately before each task, each task with the product information (12), the relationship involving an input and output information of each task, and the product manufactured at the each task and a related information-retaining means (10) for storing and retaining the each task of the plurality of tasks and the product information that are related to each other so that the relationship of the each of plurality of the tasks and the product information can be used as a reference.

2. The action management support system according to claim 1, **characterized in that** the product information (12) includes information that shows a relation between the product information and every product manufactured through the each of the plurality of tasks.

3. The action management support system according to claim 1 or 2, **characterized in that** the related information-retaining means (10) identifies only a first related product information (12) before each corresponding task as an input information of the each corresponding task, and identifies and alters a second related product information (12) after the each corresponding task as an output information of the each corresponding task.

4. The action management support system according to claim 3, **characterized in that** the related information-retaining means (10) includes an access attribute management means which manages an access attribute of the product information (12) related to the each of the plurality of tasks and alternating product informations (12) related to the each of the plurality of tasks including the first product information (12) is permitted as for a product information (12) that is given an attribute to permit altering the first related product information through the access attribute management means.

5. The action management support system according to claim 1, **characterized in that** the related information-retaining means (10) includes an alternation-accepting means (10) which accepts a direction to alter a specific product and an alternation notification means (10) that sends a notification of the direction to a person in charge of a task where the specific product is manufactured.

6. The action management support system according to claim 1, **characterized in that** the related information-retaining means (10) includes a progress inquiry means that accepts an inquiry from outside about progress of either an execution of a specific task or manufacturing a specific product and an answer-requesting means that requests a person in charge of a task that corresponds to the inquiry to answer the inquiry.

7. The action management support system according to claim 1, **characterized in that** the process information (11) includes detailed information about the each of the plurality of tasks with multiple steps of works and the related information-retaining means (10) includes a report-requesting means (10) to request each person in charge of the each of the plurality of tasks to report progress of the production.

8. The action management support system according to claim 7, **characterized in that** the related information-retaining means (10) further includes a progress notification means (10) that automatically sends to a specific part notification of reported progress of a specific work among the multiple steps of work.

9. The action management support system according to claim 8, **characterized in that** the related information-retaining means (10) further includes a notification setting means (10) that permits appropriately setting an automatic notification level of the portion that automatically sends the notification of reported progress of the specific work.

10. The action management support system according to claim 1, **characterized in that** the process information (11) includes information about requisite work items which are set at each of the plurality of tasks and
the related information-retaining means (10) further includes an input-requesting means (10) which requests inputting whether the requisite work items have been executed.

11. The action management support system according to claim 10, **characterized in that** the related information-retaining means (10) further includes an automatic notification means (10) which automatically notifies a specific part whether the requisite work items have been executed.

12. The action management support system according to any one of claims 1 through 3 **characterized in that** the related information-retaining means (10) further includes an alternation inquiry means (10) which automatically inquires whether a application is approved when a person who is not in charge of a task applies for an alternation of a product manufactured at the task.
